**Europäisches Patentamt**

**European Patent Office**

**Office européen des brevets**

(11) Publication number: **0 103 984**
**B1**

(12)

# EUROPEAN PATENT SPECIFICATION

(45) Date of publication of patent specification: **18.01.89**

(51) Int. Cl.⁴: **B 60 C 3/00,** B 60 C 15/06

(21) Application number: **83304733.5**

(22) Date of filing: **15.08.83**

(54) Pneumatic radial tire and mould of manufacturing the same.

(30) Priority: **13.09.82 JP 158013/82**

(43) Date of publication of application:
**28.03.84 Bulletin 84/13**

(45) Publication of the grant of the patent:
**18.01.89 Bulletin 89/03**

(84) Designated Contracting States:
**BE DE FR GB**

(56) References cited:
**EP-A-0 012 694**
**DE-A-2 913 949**
**FR-A-2 120 421**
**FR-A-2 279 574**
**FR-A-2 499 473**
**GB-A-2 002 298**

**KUNSTSTOFFTECHNIK, vol. 11, no. 1/2,**
**January/February 1972, pages 23-30, Mainz,**
**DE; F. FRANK et al.: "Die Querschnittsform von**
**Kreuzlagen und Gürtelreifen"**

(73) Proprietor: **BRIDGESTONE TIRE COMPANY
LIMITED
10-1, Kyobashi 1-Chome Chuo-Ku
Tokyo (JP)**

(72) Inventor: **Togashi, Minoru
32-11, Miyagi 1-Chome
Adachi-Ku Tokyo (JP)**
Inventor: **Kato, Kenshiro
29-1, Onta-Cho 2-Chome
Higashi-murayama City Tokyo (JP)**

(74) Representative: **Whalley, Kevin et al
MARKS & CLERK 57/60 Lincoln's Inn Fields
London WC2A 3LS (GB)**

## Description

This invention relates to a pneumatic radial tire having low rolling resistance, and to a mould for manufacturing a pneumatic radial tire, and particularly aims to improve the various performances of a pneumatic radial tire, *interalia* to effectively reduce the rolling resistance by modifying the radial surface profile of a carcass.

It is known that in order to reduce the rolling resistance of a tire it is necessary to reduce the energy which is consumed due to periodic stresses and strains caused in the tire by its rolling. The rates of consumed energies at respective portions of tires are approximately 34% at the tread, 27% at the buttress portions, 25% at the sidewalls and 14% at the bead portions, according to an analysis of percentages of consumed energies of radial carcass tires under normal use conditions, that is inflated at an internal pressure of the order of at the most 2 kg/cm$^2$.

The tread makes the largest contribution to the rolling resistance of the tire, and in order to reduce inner friction and hence the rolling resistance, the compounding ratio of the tread rubber has been generally selected so as to increase its resilience. However, the wet performance, which is one of the important characteristics of the tire, is adversely affected depending upon the degree of the reduced rolling resistance.

Accordingly, the rolling resistance cannot be greatly decreased unless particular measures are taken to prevent the wet performance from being adversely affected. However, no effective method of maintaining the wet performance has yet been found.

It has been further proposed to use in the tire sidewalls a rubber compounding ratio having reduced inner friction in the same manner as in the tread. This however only reduces the rolling resistance by 3% or less, but adversely affects the damping capacity for vibration caused in the tire and hence the riding comfort of the tire.

Moreover, it has been proposed to use single layer carcasses instead of double layer carcasses, or to make the belt widths narrower, to make light weight tires in order to reduce the rolling resistance of the tires. However, such measures unavoidably reduce the rigidity of important portions of the tires and decrease the steering stability.

EP—A—0012694 (according to the preamble of Claim 1) discloses a radial pneumatic tire which comprises a carcass reinforcement 7 of which the neutral axis 7' in the uninflated state differs from the neutral axis 7'' in the inflated state, inflation producing initial compressive stresses in the rubber of the shoulders 4 and initial tensile stresses in the bent portions 71 of the carcass reinforcement in the beads. In such a tyre,

(a) the neutral axes 7', 7'' intersect between the points of the neutral axis 7' and of the neutral axis 7'' contacted by a common tangent perpendicular to the rotational axis of the tyre,

(b) the neutral axis 7' has a segment between the intersection and the point where the carcass reinforcement becomes parallel to the crown reinforcement which is radially and axially outside the corresponding segment of the neutral axis 7'' and

(c) the neutral axis 7' has a segment between the intersection and the point where the carcass reinforcement becomes parallel to the beadwire which is radially outside and axially inside the corresponding segment of the neutral axis 7''.

In such a tire as described in EP—A—0012694 the cords of the carcass, being steel cords, substantially do not stretch. The tire of the present invention, as defined and described in the following, is quite different from that described in EP—A—0012694 in respect of (1) the small expansion in the outer zone of the carcass from the shoulder to the sidewall when the tire is inflated, and (2) the expansion of the carcass maximum width when the tire is inflated.

The present invention is based on the discovery that by suitably modifying the carcass radial surface profile the rolling resistance of a tire can be remarkably reduced and simultaneously the steering stability and the ride comfort can also be improved without adversely affecting the wet performance and durability of the tire, as a result of investigations of deformations of sidewalls of rolling tires subjected to loads.

According to the invention, there is provided a pneumatic radial tire including a pair of sidewalls, bead portions at the respective radially inner ends of the sidewalls, a crown portion extending between the radially outer ends of the sidewalls, a carcass comprising at least one ply including organic fibre cord layers and having ends turned back about bead wires embedded in the said bead portions to form turned-back portions, wherein the carcass has, on each side of a plane including the equatorial line of the tire in a radial cross-section passing through the rotational axis of the tire, an outwardly extending configuration with a centre of a radius of curvature positioned inside the carcass in a radially outer zone from a carcass maximum width position to the said crown portion and further having an inwardly extending configuration continuous with the said outwardly extending configuration with a centre of a radius of curvature positioned outside the carcass in a radially inner zone from the said carcass maximum width portion to the said bead portion when the tire mounted on a rim is uninflated or inflated to an internal pressure 5% of normal internal pressure; wherein the said inwardly extending configuration of the carcass in the said radially inner zone is changed into a modified inwardly extending configuration with an incrsased radius of curvature with an outward bulged deformation greater than that in the radially outer zone when the tire on the rim is inflated to the normal internal pressure, and wherein the height of the said carcass maximum width portion from the bead base is within a range of 50—65% of the height of the outermost portion of the crown portion from the bead base, and the height of the junction of the said outwardly and inwardly extending configurations from the bead base is within a range of 20—35% of the said height of the outermost portion of the crown portion when the tire on the rim is inflated to the normal internal pressure; characterized in that:

i) the said outwardly extending configuration of the carcass in the said radially outer zone is bulged outwardly by a smaller amount than deformation in the radially inner zone, when the tire on the rim is inflated to the normal internal pressure;

ii) the carcass maximum width under the normal internal pressure is larger than that when said tire is filled with the internal pressure 5% of the normal internal pressure; and

iii) hard rubber fillers are disposed between the said carcass ply and the turned-back portion thereof.

The invention in a further aspect provides a mould for manufacturing a pneumatic radial tire according to the invention by vulcanising and forming in the mould, the said mould comprising a cavity having, in a radial cross-section passing through a line corresponding to the rotational axis of the tire, portions corresponding to the sidewalls of the tire, and the said cavity having, on each side of a plane including an equatorial line of the tire in the said radial cross-section, an outwardly extending profile the centre of the radius of curvature of which is inside the mould in a radially outer zone from the mould maximum width position to the said crown portion, characterized in that the said cavity has, on each side of the said plane including an equatorial line of the tire in the said radial cross-section, and in a radially inner zone from said mould maximum width position to the said bead portion, an outwardly extending profile whose radius of curvature if greater than that in the radially outer zone continuous with the said outwardly extending profile in the radially outer zone and the centre of the radius of curvature of outwardly extending profile in the radially inner zone being inside the mould, and that the said foot portion has a width in the direction of the said rotational axis 20—50% wider than the width of the said rim.

Thus there is provided an improved pneumatic tire the rolling resistance of which is remarkably reduced with improved steering stability and ride comfort without adversely affecting its wet performance and durability by making higher the carcass maximum width position and the carcass curvature reverse position, or enlarging the curvature of the carcass in the radially outer zone of the carcass maximum width position and simultaneously the carcass curvature reverse extent in the radially inner zone of the sidewalls so as to intentionally deviate from the naturally equilibrated configuration.

There is also provided a mould for manufacturing a pneumatic tire with reduced rolling resistance and improved steering stability and ride comfort without sacrificing its wet performance and durability, by vulcanizing and forming in a mould comprising a cavity having a foot width 20—50% wider than the rim width to obtain the tire.

The invention will be further described, by way of example only, with reference to the accompanying drawings, in which:—

Figure 1 is a schematic illustration of deformation when a tire is subjected to a load;

Figure 2a is a schematic sectional view of a tire according to the invention;

Figure 2b illustrates a comparison of the carcass radial surface profile of the tire shown in Figure 2a with a naturally equilibrated carcass profile;

Figure 3 is a schematic illustration of the deformation of a tire having a naturally equilibrated profile when internally inflated;

Figure 4 is a schematic illustration of the deformation of a tire having a carcass radial surface profile according to the invention when internally inflated;

Figure 5 schematically illustrates various mould cavity profiles for producing tires according to the invention; and

Figure 6 schematically illustrates carcass radial surface profiles of comparative tires and of tires according to the invention.

In general, it is known that the deformation of sidewalls is divided into bending deformation and shear-deformation. It has now been discovered that radially inner portions of sidewalls (in the proximity of bead portions) are subjected to bending deformation much more than shearing deformation but the radially outer portions of the sidewalls (in the proximity of the tread) are subjected to shearing deformation much more than bending deformation.

Shearing deformation at the radially outer portions of the sidewalls is more complicated than the bending deformation. The present inventors have carefully investigated these deformations and have ascertained the following.

First, during rolling under a load the shearing deformation in the radially outer zones of the sidewalls of a tire is relatively small immediately below the load but considerably larger in zones which are about to be in contact with and away from a ground surface, which takes a large part of the entire consumed energy.

Second, the shearing and bending deformations are in a reciprocal relationship in that when one increases, the other decreases.

In view of the above, it has been found that even if the bending deformation concentrated immediately below the load in the radially outer portions of the sidewalls, being comparatively small, increases somewhat, the entire consumed energy can be reduced by decreasing the shearing deformation.

In order to increase the bending deformation in the radially outer zones of the sidewalls, it is necessary to enlarge the curvature of the profiles of the shoulders of the carcass corresponding to the radially outer zones of the sidewalls when the tire is mounted on a rim and inflated to normal internal pressure.

The consumed energy due to the bending deformation at the radially inner zones of the sidewalls is generally indicated by the following equation.

$$\text{Consumed energy} = A.E. \tan\delta \ (\Delta C)^2 \cdot S \qquad (1)$$

where

A: a suitable constant

E: modulus of elasticity of radially inner portion of sidewall

tanδ: loss tangent

ΔC: variation of curvature of radially inner portion of sidewall by bending deformation, and

S: length of radially inner portion of sidewall from the widest portion of carcass.

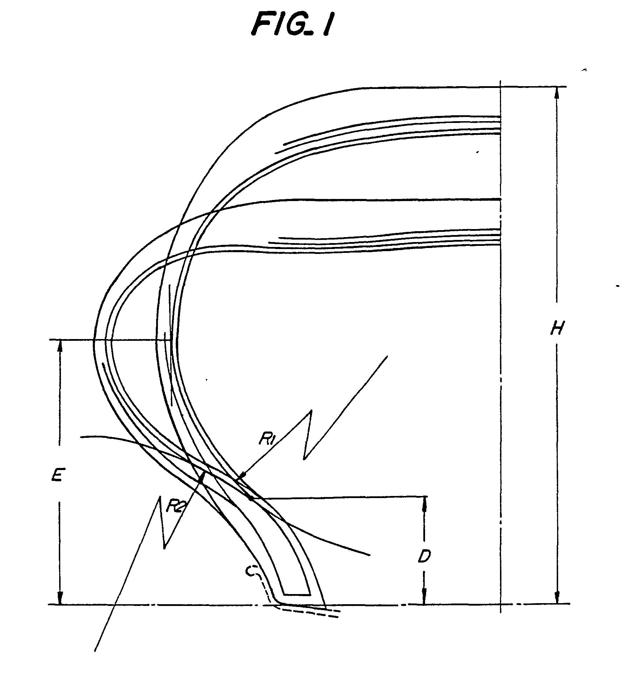

It is clear from the equation (1) that if E, tanδ and S are respectively the same, the consumed energy is proportional to $(\Delta C)^2$. The inventors have investigated the variation in curvature of the radially inner portions of sidewalls of actual tires subjected to load to ascertain that the tire has at its radially inner portions of sidewalls an outwardly extending curvature of radius $R_1$ before deformation but the sidewalls are reversely deformed to have an inwardly extending curvature of radius $R_2$ after loading as shown in Figure 1.

The change $(\Delta C)^2$ in curvature at the radially inner portions of the sidewalls in the equation (1) is then indicated as follows.

$$(\Delta C)^2 = \left( \frac{1}{R_1} + \frac{1}{R_2} \right)^2 \qquad (2)$$

If the tire mounted on a rim and inflated to normal internal pressure has already at the radially inner portions of sidewalls inwardly extending curvatures, the change $(\Delta C')^2$ in curvature is indicated as follows.

$$(\Delta C')^2 = (\frac{1}{R_1} - \frac{1}{R_2}) \qquad (3)$$

From the equations (2) and (3) it is clear that $(\Delta C')^2$ is less than $(\Delta C)^2$ and the consumed energy according to the equation (1) becomes correspondingly small.

It is thus effective to provide an inwardly extending curvature at the radially inner portions of the sidewalls when the tire is inflated to the normal internal pressure. In consideration of the fact that the bending deformation is mostly caused at the carcass mainly supporting the inflated internal pressure, the height of the reversing position of the curvatures (shown as D in Figure 1) is desirably as high as possible so as to cause the inwardly extending curvature at the carcass located at the radially inner zones of the sidewalls.

The height D must be equal to the height at a location where the radially inward zones of the sidewalls are reversely deformed from the outward to the inward direction. Although this height is dependent upon the construction in the radially inward portions of the sidewalls, the height must be in the range of 20—35% of the height H of the tire mounted on a rim and inflated to the normal internal pressure.

As above-mentioned, in order to increase the bending deformation in the radially outer zones of the sidewalls, it is necessary to enlarge the curvature of the profiles of the shoulders of the carcass when the tire is mounted on the rim inflated to normal internal pressure. For this purpose, in addition to the height D, it is necessary to properly select the height (shown by E in Figure 1) of the location where the carcass is the widest in the upper portions of the sidewalls.

The inventors have determined that the height E should be within a range of 50—65% of the height H of the tire mounted on the rim and inflated to normal internal pressure.

In this case, if the height E exceeds 65% of the height H, the bending deformation is concentrated at the relatively thick buttress portions to cancel the effecting resulting from the reduced shearing deformation. If the height E is less than 50% of the height H, an unnatural carcass radial surface profile is formed in conjunction with the height D of the carcass curvature reverse position to adversely affect the tire durability and to make the manufacturing of the tire difficult.

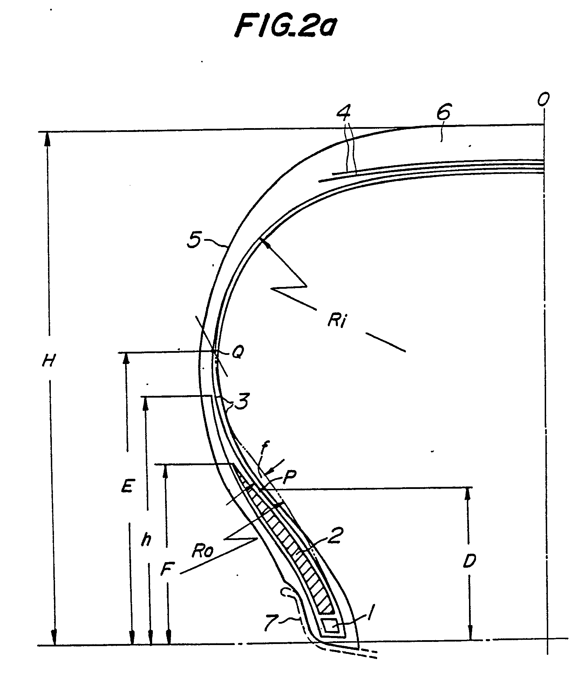

The present invention relates to a tire including at least one carcass 3 comprising at least one ply made of rubber coated organic fibre cords arranged substantially in radial planes of the tire and turned-back about bead wires 1 and embracing hard rubber fillers 2 between the carcass ply and the turned-back portions thereof, at least two belt layers 4 of rubber coated cords having a high modulus of elasticity and intesecting each other at relatively small angles for reinforcing the tire in conjunction with the carcass 3, and rubber sidewalls 5 at both sides of the carcass 3 and a rubber tread 6 outside the belt layers 4 as shown in Figure 2a. When the tire is mounted on a rim 7 and inflated to normal internal pressure, the height E at the location Q of the maximum width of the carcass 3 is within the range of 50—65% of the height H of the tire and the height D at the location P where the carcass 3 is deformed from the outward to inward direction is within the range of 20—35% of the height H. It is necessary to form the tire in a mould so that when the carcass 3 is firmly held when formed and vulcanized and the tire is mounted on a rim and inflated to an internal pressure corresponding to 5% of the normal internal pressure, the carcass 3 in the radially outer zone has a radius $R_i$ of curvature having its centre located inside the carcass 3 between the crown 6 and the location Q of the maximum carcass width, while the carcass 3 in the radially inner zone smoothly continues with the above outwardly extending carcass portion and has a radius $R_o$ of curvature having its centre located outside the carcass 3 as shown in phantom line in Figure 2a. Only the left half of the tire is illustrated in Figure 2a because it is symmetrical with respect to the equatorial line O—O. The same is also true in respect of the other figures.

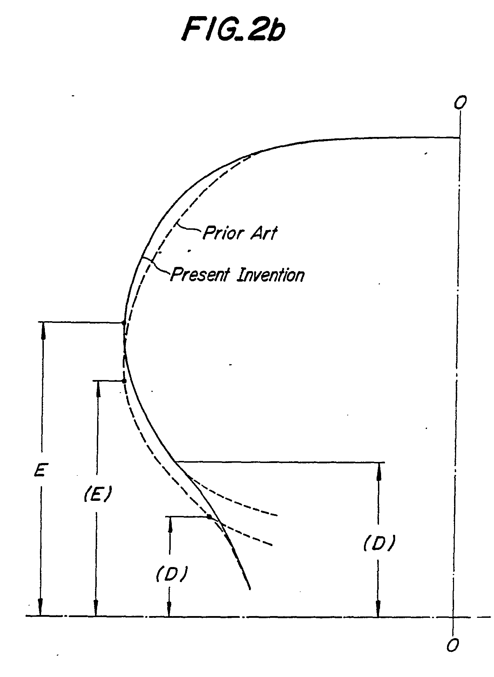

As can be seen from Figure 2b, which illustrates a comparison of the profile of the carcass according to the invention with a naturally equilibrated carcass radial surface profile (in broken lines in Figure 2b), it is noted that when the tire is mounted on a rim and inflated to normal internal pressure, the profile of the tire according to the invention is already more approximate to the deformed profile subjected to a load than that of a tire of the prior art. It is thus apparent that the tire according to the invention can consume less energy due to periodic variation in stress and strain caused by the tire rolling with the aid of appropriate variation of the carcass radial surface profile when subjected to a load.

Furthermore, the deformation f (Figure 2a) of the carcass at the radially inner zone when the tire is inflated to normal internal pressure is preferably within a range of 5—10% of the height D at the carcass reverse position.

Organic fibre cords such as polyester, nylon, rayon or aromatic polyamide fibre (Kevlar) cords may be used for the carcass 3. Metal cords, typically steel cords, organic fibre cords such as rayon, polyester and aromatic polyamide fibre cords and inextensible cords such as glass fibre cords may be used for the belt 4. These cords are arranged obliquely at angles of 10—25° with respect to the equatorial line and a plurality of layers are arranged one above the other so that the cords of the respective layers cross each other.

In superimposing the belt layers 4, the respective belt layers may have both their edges cut or auxiliary plies may be used which consist of one or more thermally contractible layers, for example, nylon cords, arranged substantially parallel with the equatorial line of the tire so as to cover the edges of the belts. Moreover, at least one of the belt layers may be provided at both its edges with turned-back portions located inside or outside the other belt or enclosing the cut edges of the other belt.

The rubber filler 2 is tapered radially outwardly from the top of the bead wire 1 to a location F slightly beyond the height D of the curvature reverse position. The rubber filler preferably has a Shore A rubber hardness of 80—97° and a loss tangent of 0.15—0.25 and a loss modulus of $8 \times 10^7$—$2.5 \times 10^8$ dyne/cm². 

The end of the turned back portion of the carcass preferably extends to a height h which is beyond the radially outer end of the hard rubber filler but radially inward of the carcass maximum width position Q.

In order to maintain the reverse curvatures of the carcass, it is necessary to provide a large bending rigidity in the proximity of the bead portions. However, reinforcement in the proximity of the bead portion with excess reinforcing members tends to adversely affect the decrease of rolling resistance aimed at. Accordingly, at least part of the bead filler rubber is preferably a hard rubber stock having a Shore A hardness of 80—97°. If the hardness is less than 80°, the effectiveness may not be accomplished sufficiently. If the hardness is greater than 97°, the durability is adversely affected although it is advantageous for maintaining the carcass radial surface profile.

As mentioned above, the tire according to the invention includes the carcass radial surface profile precluding the naturally equilibrated configuration of the carcass. This can be easily recognized by observing the variation in carcass radial surface profile when the tire is inflated.

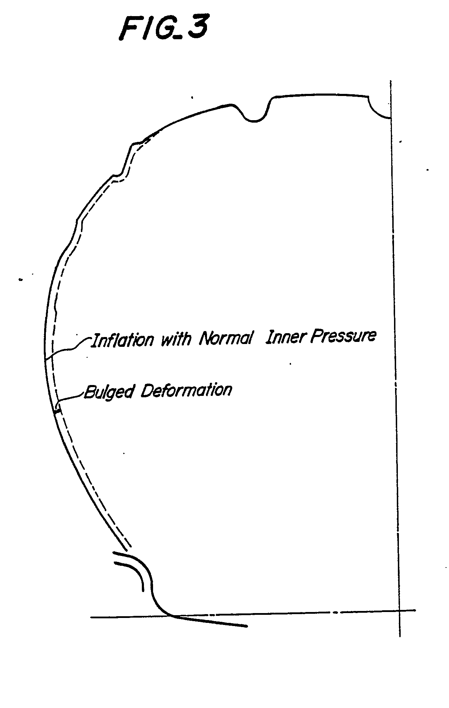

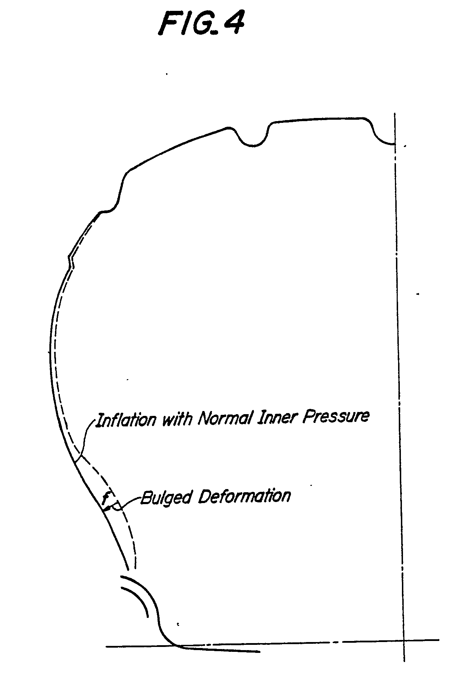

Figures 3 and 4 illustrate the variation in carcass profile of tires of 185/70 SR14 each mounted on a rim inflated from 5% of a nominal pressure to the normal inner pressure. In the case of a so-called naturally equilibrated profile, as shown in Figure 3, the entire sidewall bulges uniformly. In contrast therewith, with the carcass radial surface profile according to the invention, the bulged deformation f in the zone radially inward of the carcass maximum width position is much greater than that in the zone radially outward of the carcass maximum width position which is slightly bulged as shown in Figure 4. The solid and broken lines in Figures 3 and 4 are obtained by reproducing the inner profiles of the carcass radial surfaces by the use of plaster before and after the bulged deformation.

The difference in bulged deformation between tires of the invention and of the prior art will of course affect the distribution of tension in the carcasses. With the tire according to the invention, the carcass in the proximity of the bead portions exhibiting the large bulged deformation f is subjected to a higher tension to provide a higher apparent rigidity, while the carcass from the buttress portion to the radially outer portion of the sidewall exhibiting the small bulged deformation is subjected to a relatively low tension to provide a lower apparent rigidity. This can reduce the rolling resistance and, in addition, improve the steering stability and ride comfort.

First, a tire arranged to provide a slip angle will be considered. In this case, a lateral force acts upon the tire to cause transverse deformation. With the tire according to the invention, because of the high tension in the carcass in the proximity of the bead portions and high apparent rigidity, the tire exhibits a high rigidity against transverse deformation to provide a high cornering ability and a high stability particularly in the case of a large slip angle.

Next, a tire riding over a protrusion on a road surface will be considered. In this case, the tire deforms much more than when the tire is subjected to normal load. Accordingly, absorption of the deformation by the sidewalls is important for improving the ride comfort. It will be appreciated that the tire according to the invention is constituted so as to reduce the tension in the carcass ply from the radially outer portion of the sidewall to the buttress portion, so that the apparent rigidity is lower to easily absorb the deformation, thereby improving the ride comfort.

As above described, the carcass radial surface profile is such as to render the carcass curvature reverse position as high as possible. In order to provide such a profile after the tire is inflated to normal internal pressure, it is necessary to previously impart a large bending rigidity to the proximity of bead portions. However, reinforcing the proximity of the bead portions by the use of reinforcing members more than reasonably required adversely affects the improvement or reduction of the rolling resistance. It is therefore found to be effective to utilize the following two measures.

(1) a hard rubber having a Shore A hardness of 80—97° is used for part or all of the bead filler rubber of the tire.

(2) The height of the turned-back portion of the carcass is equal to or higher than the height D of the carcass curvature reverse position.

A bead filler rubber having a hardness less than 80° does not achieve the desired effectiveness, while a bead filler rubber having a hardness of more than 97° serves to maintain the carcass radial surface profile but adversely affects the durability of the tire. Using either or both of the above features (1) and (2) effectively exhibits the various performances of the tire according to the invention.

The avoidance of reinforcement of the proximity of the bead portions using reinforcing members serves to easily provide the inwardly extending profile of the tire in the zone from the tire maximum width position to the innermost position as the curvature of the carcass reverses in the zone.

As above described, the tire according to the invention comprises at least one carcass ply made of rubber coated organic fibre cords arranged substantially in radial planes of the tire and turned-back about bead wires, at least two belt layers of rubber coated cords having a high modulus of elasticity and crossing each other at relatively small angles for reinforcing the tire in conjunction with the carcass, and sidewall rubbers on both sides of the carcass and a tread rubber outside the belt. Furthermore, it is required to fulfil the following three conditions (a)—(c).

(a) While the tire mounted on a rim is being inflated with an internal pressure from 5% of the normal internal pressure to the normal internal pressure, the deformation in the zone from the tire maximum width position to the radially inner position is relatively large but the deformation in the zone from the tire maximum width position toward the radially outer position is small.

(b) When the tire mounted on the rim is inflated to normal internal pressure, the height of the carcass maximum width position from a rim base is 50—65%, preferably 50—60%, of the height of the tire from the rim base to the outermost surface of the tread.

(c) When the tire mounted on the rim is inflated to normal internal pressure, the height of the carcass curvature reverse position from the rim base is 20—35% of the height of the tire from the rim base to the outermost surface of the tread.

Such a tire fulfilling the above conditions, however, cannot be manufactured by a tire vulcanizing mould having a normal configuration because of the particular shape of the tire intentionally deviating from the naturally equilibrated configuration. The inventors have therefore investigated this problem to find a tire vulcanizing mould having a configuration capable of manufacturing such a tire.

In general, a cavity of a tire vulcanizing mould is determined by modifying somewhat a configuration corresponding to that of a tire mounted on a rim. According to this procedure, the heights of the mould maximum width position and of the mould curvature reverse position are determined by making the tire vulcanizing mould itself commensurate with the carcass radial surface profile of the tire to be manufactured. The inventors have studied the variation in the carcass radial surface profile when tires are inflated at from 5% to the normal internal pressure. As the result, the inventors have found that such a variation in configuration arises in the direction reducing its curvature in the zone of large curvature from sidewalls to bead portions, while the variation arises in the direction enlarging its curvature in the zone of small curvature and arises in the direction of plus R in the zone of reverse R, respectively.

For the above, it has been found that the variation in configuration arises in the direction deviating from the desired carcass radial surface profile. If the configuration of the vulcanizing mould for manufacturing a tire intentionally deviating from the naturally equilibrated configuration is determined in consideration of this fact, the resultant mould configuration is in fact extremely unbalanced, which would give rise to difficulties in manufacture and a tire manufactured in the mould includes large stresses and strains therein when the tire on a rim is inflated resulting in less durability which is unacceptable for practical use.

In contrast to the prior art, the configuration of the vulcanizing mould to be used in manufacturing a tire according to the invention is quite different from the carcass radial surface profile of the tire mounted on a rim. That is, the mould to be used manufacturing a tire according to the invention has a cavity wherein the width of the cavity portion corresponding to the rim for mounting the tire thereon is 20—50% wider (1—25" [2.5—6.35 cm] wider in the case of a 5" [12.7 cm] rim) than the width of the rim and the cavity progressively widens from cavity portions corresponding to shoulders of the tire toward the cavity portion corresponding to the rim. The width of the cavity corresponding to the width of the rim is referred to herein as "foot width" which substantially corresponds to the distance between the bead heels of the tire. Such a vulcanizing mould results from investigations of the relation between the mould configuration and stress-strain conditions caused in tires mounted on rims and inflated. When a tire manufactured in such a mould is mounted on a rim narrower than the foot width of the mould, the height of the maximum width position of the carcass radial surface profile is higher than that of the maximum width position of the mould and the height of the carcass curvature reverse position in the proximity of the bead portions is also higher than that of the maximum width position of the mould. When the foot width of the mould is less than the width of the rim plus 20%, the above effect cannot be accomplished. A foot width of the mould more than the width of the rim plus 50% is undesirable because mounting of the tire on the rim is difficult.

When a tire manufactured in such a mould is mounted on a rim and inflated from 5% to the normal internal pressure, the carcass radial surface profile varies in the manner above described. The carcass radial surface profile after inflation to the normal internal pressure is maintained in that form intentionally deviating from the naturally equilibrated configuration. It will be appreciated that with the mould to be used in manufacturing a tire according to the invention the variation in carcass radial surface profile during inflation is in the direction returning to the carcass radial surface profile upon completion of vulcanizing so that by mounting the tire on a rim narrower than the foot width the stress and strain once arisen in the tire are released without adversely affecting the durability of the tire.

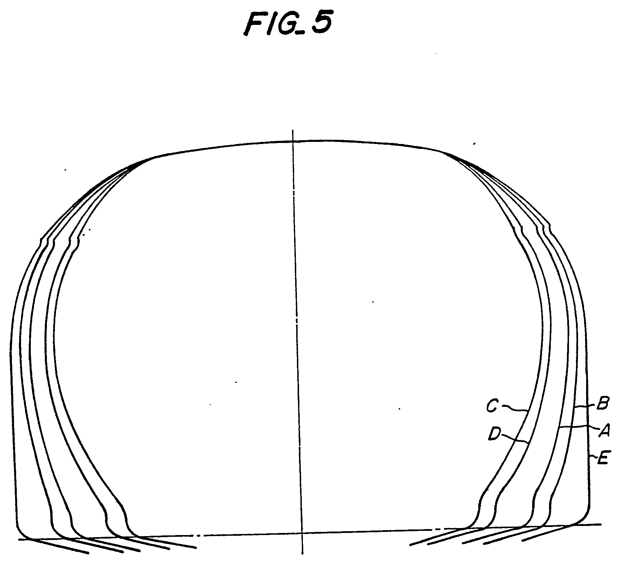

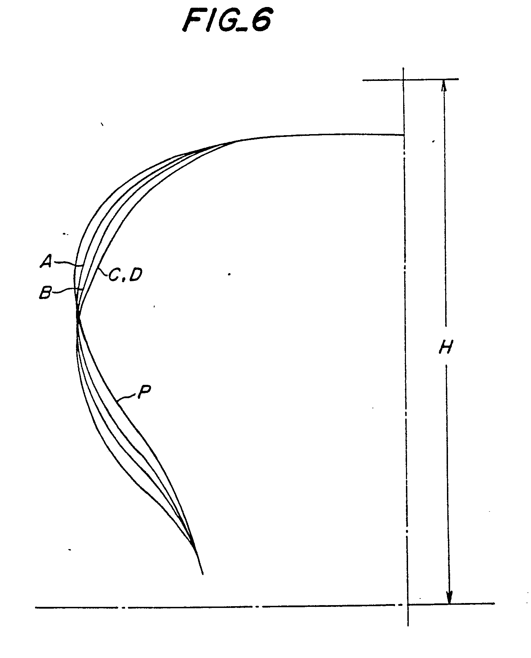

Figure 5 illustrates various profiles of cavities in moulds A, B, C, D and E for tires of 185/70 SR14 with rims having a normal width of 5″ (12.7 cm). The moulds A and B have foot widths 1.5″ (3.8 cm) and 2″ (5.1 cm) wider than the 5″ (12.7 cm) rim width, respectively. The mould C has a foot width substantially equal to the 5″ (12.7 cm) rim width. The moulds D and E have foot widths 0.5″ (1.3 cm) and 3″ (7.6 cm) wider than the 5″ (12.7 cm) rim width, respectively. Figure 6 illustrates the carcass radial surface profiles of tires manufactured in the above moulds A, B, C, D and E when the tires on the rims are inflated to normal internal pressure, the profiles A, B, C and D corresponding to the tires manufactured in the moulds A, B, C and D. It is evident that the profiles A and B deviate from the naturally equilibrated configuration and the profiles C and D substantially coincide with the naturally equilibrated configuration, which profiles C and D are not suitable for the purpose of the present invention. The tire manufactured in the mould E is not practically used because of its too wide distance beetween bead heels which makes it difficult to mount the tire on the rim. A curve P in Figure 6 corresponds to a curve of Comparative Example 2, as will be explained later.

The invention will be further described with reference to the following illustrative Examples.

Dimensions and properties of tires of the invention and comparative tires are shown in Table 1. Each of the carcasses 3 comprised one ply including high modulus polyester cords of 1500 d/2 arranged at 90° with respect to the equatorial line of the tire. For each tire were used two belts 4 each including steel cords (twisted structure 1×5×0.25 mm) crossing the cords of the other belt and arranged at approximately 17° with respect to the equatorial line. The height F (Figure 2a) of fillers was 35% of the height H of the tires. These tires were mounted on 5J rims. Other factors were the same in all the tires.

## TABLE 1
### Tires of the invention and comparative tires

| Tire | E/H | D/H | h/H | | | f/D | Bead filler | | |
| --- | --- | --- | --- | --- | --- | --- | --- | --- | --- |
| | | | | | | | Loss tangent | Hardness (shore A) | Loss modulus (dyne/cm²) |
| Comparative tire 1 | 46% | 18% | 47% | | | 0 | 0.195 | 95 | $1.9 \times 10^8$ |
| Comparative tire 2 | 67% | 37% | 47% | | | 12 | " | 95 | " |
| Tire of invention 1 | 57% | 24% | 47% | | | 7.5 | " | 95 | " |
| Tire of invention 2 | 62% | 33% | 47% | | | 8 | " | 95 | " |
| Tire of invention 3 | 57% | 22% | 15% | | | 6 | " | 95 | " |
| Tire of invention 4 | 57% | 21% | 47% | | | 5.5 | 0.223 | 74 | $3.9 \times 10^7$ |

Note:
Tire size: 185/70 SR14
Normal inner pressure: 1.7 kg/cm²
Rim: 5J-14″
Width of rim: 5″ (127 mm)

The rolling resistances of these tires are shown in Table 2, wherein the rolling resistance of the comparative tire 1 is taken to be 100 as an index. The larger the index, the better the rolling resistance.

In the test of rolling resistance, the tire was urged against a rotating drum having a 1,707 mm diameter to rotatively drive the tire to a predetermined speed whereupon the drive of the drum was stopped, so that although inertia forces of the drum and tire tend to continue their rotating movement, their rotating speeds progressively decrease because the kinetic energy is converted into heat energy due to repeated deformations at tire surfaces in contact with the drum, which heat energy dissipates into the atmosphere. The rolling resistances were calculated by degrees of deceleration during the rotation of the drum and tire owing to their inertia forces.

TABLE 2
Rolling resistance of tire

| Inner pressure | Tire Speed km/H | Compara-tive tire 1 | Compara-tive tire 2 | Tire of invention 1 | Tire of invention 2 | Tire of invention 3 | Tire of invention 4 |
|---|---|---|---|---|---|---|---|
| 1.7 kg/cm² | 50 | 100 | 102 | 109 | 111 | 106 | 106 |
| | 80 | 100 | 101 | 112 | 116 | 106 | 106 |
| | 100 | 100 | 102 | 118 | 120 | 108 | 106 |
| | 150 | 100 | 100 | 122 | 126 | 110 | 108 |
| 2.1 kg/cm² | 50 | 100 | 102 | 110 | 112 | 106 | 106 |
| | 80 | 100 | 101 | 112 | 116 | 106 | 106 |
| | 100 | 100 | 101 | 116 | 121 | 107 | 106 |
| | 150 | 100 | 101 | 120 | 129 | 109 | 107 |
| 2.5 kg/cm² | 50 | 100 | 100 | 110 | 113 | 106 | 106 |
| | 80 | 100 | 100 | 112 | 116 | 107 | 106 |
| | 100 | 100 | 101 | 116 | 120 | 108 | 106 |
| | 150 | 100 | 101 | 120 | 130 | 110 | 108 |

Note: All the loads acting upon the tires for the test are the normal load for 1.7 kg/cm² inner pressure according to JIS.

As can be seen from the Table 2, the tires 1 and 2 according to the invention achieve a remarkable improvement or reduction of the rolling resistance, being 10—30% as much as those of the comparative tires. The tire 3 according to the invention has a height of the returning carcass lower than the carcass curvature reverse position, and the effect is somewhat less than those of the tires 1 and 2 according to the invention. The tire 4 according to the invention includes bead filler rubbers having a somewhat lower hardness, which exhibits substantially the same effect as that of the tire 3.

From these viewpoints, the tires 1 and 2 according to the invention are the most suitable in order to exhibit the effect of the invention to the maximum extent. However, even the tires 3 and 4 according to the invention bring about a substantial effect to improve or reduce the rolling resistance by 6—10% in comparison with the comparative tire 1.

In this manner, the tires according to the invention improve or reduce the rolling resistance by making higher the carcass maximum width position and the carcass curvature reverse position, or enlarging within the suitable values the curvature of carcass in the radially outer zone of the carcass maximum width position and simultaneously the carcass curvature reverse extent in the radially inner zone of the sidewalls. It is evident from the comparative tire 2 that no effect can be accomplished if these values are too high for the reason above described.

Table 3 shows cornering powers of the tire 1 according to the invention with the comparative tire 1, wherein the cornering power of the latter is assumed to be 100 as an index. The larger the index, the better is the steering performance. It can be seen from Table 3 that the steering performance of the tire according to the invention can be improved as well as the rolling resistance.

TABLE 3
Comparison of steering performance

| Performance | Tire | Comparative tire 1 | Tire of Invention 1 |
|---|---|---|---|
| Cornering power kg/deg | | 100 | 105 |

9

Moreover, the drum for the test was formed on its cylindrical surface with protrusions which cause forces on the rotating axle of the tires during the rotation. The forces on the axle were measured to obtain comparative data of the ride comfort against vibration as shown in Table 4. The larger the index in Table 4, the better is the ride comfort. It will be understood that the tire according to the invention has a superior ride comfort and particularly improves the comfort greatly at high speeds from the data of reaction in horizontal directions.

TABLE 4
Comparison of ride comfort

| Measured item | Condition | Comparative tire 1 | Tire of invention 1 |
|---|---|---|---|
| Reaction in vertical direction upon riding over protrusion | low speed | 100 | 101 |
| | high speed | 100 | 102 |
| Reaction in horizontal direction upon riding over protrusion | low speed | 100 | 101 |
| | high speed | 100 | 111 |

Note: Low speed: 20—50 km/H
High speed: 60—120 km/H

Furthermore, the inventors compared wet performances of these tires on concrete roads (skid number SN=35 indicating the roughness of the roads) and on asphalt roads (SN=50), and found that the tires according to the invention are not inferior in respect of their wet performance to the comparative tires.

Moreover, the inventors compared distances over which these tires travelled on a drum under high load and high internal pressure until they were damaged, and found that the tires according to the invention are not inferior in durability to the comparative tires.

As can be seen from the above, the tires according to the invention can remarkably improve or reduce the rolling resistance without adversely affecting wet performance and durability and also effectively improve steering stability and ride comfort. Furthermore, the mould according to the invention facilitates the manufacture of tires having considerably improved performance.

**Claims**

1. A pneumatic radial tire including a pair of sidewalls (5), bead portions at the respective radially inner ends of the sidewalls, a crown portion (6) extending between the radially outer ends of the sidewalls, a carcass (3) comprising at least one ply including organic fibre cord layers and having ends turned back about bead wires (1) embedded in the said bead portions to form turned-back portions, wherein the carcass (3) has, on each side of a plane including the equatorial line (O—O) of the tire in a radial cross-section passing through the rotational axis of the tire, an outwardly extending configuration with a centre of a radius of curvature positioned inside the carcass in a radially outer zone from a carcass maximum width position (Q) to the said crown portion and further having an inwardly extending configuration continuous with the said outwardly extending configuration with a centre of a radius of curvature positioned outside the carcass in a radially inner zone from the said carcass maximum width portion (Q) to the said bead portion when the tire mounted on a rim (7) is uninflated or inflated to an internal pressure 5% of normal internal pressure; wherein the said inwardly extending configuration of the carcass in the said radially inner zone is changed into a modified inwardly extending configuration with an increased radius of curvature with an outward bulged deformation greater than that in the radially outer zone when the tire on the rim is inflated to the normal internal pressure; and wherein the height (E) of the said carcass maximum width portion (Q) from the bead base is within a range of 50—65% of the height (H) of the outermost portion of the crown portion from the bead base, and the height (D) of the junction of the said outwardly and inwardly extending configurations from the bead base is within a range of 20—35% of the said height (H) of the outermost portion of the crown portion when the tire on the rim is inflated to the normal internal pressure; characterized in that:

i) the said outwardly extending configuration of the carcass (3) in the said radially outer zone is bulged outwardly by a smaller amount than deformation in the radially inner zone, when the tire on the rim is inflated to the normal internal pressure;

ii) the carcass maximum width under the normal internal pressure is larger than that when said tire is filled with the internal pressure 5% of the normal internal pressure; and

iii) hard rubber fillers (2) are disposed between the said carcass ply (3) and the turned-back portions thereof.

2. A tire as claimed in Claim 1, characterized in that the said change (f) in configuration is within a range of 5—10% of the height (D) of the junction of the said outwardly and inwardly extending configurations when the internal pressure is increased to the normal internal pressure.

3. A tire as claimed in Claim 1 or 2, characterized in that each said hard rubber filler (2) tapers from a position adjacent the upper portion of the respective said bead wire (1) to at least the junction (D) of the said outwardly and inwardly extending configurations.

4. A tire as claimed in Claim 3, characterized in that each said turned-back portion of the carcass ply extends beyond the radially outer end of the respective hard rubber filler (2) but does not extend beyond the said carcass maximum width position (Q).

5. A tire as claimed in any of Claims 1 to 4, characterized in that each said hard rubber filler (2) has a Shore A hardness of 80—97°.

6. A tire as claimed in any of Claims 1 to 5, characterized in that each said hard rubber filler (2) has a loss tangent of 0.15—0.25 and a loss modulus of $8.0 \times 10^7$—$2.5 \times 10^8$ dyne/cm$^2$.

7. A mould for manufacturing a pneumatic radial tire according to any preceding claim by vulcanizing and forming in the mould, the said mould comprising a cavity having, in a radial cross-section passing through a line corresponding to the rotational axis of the tire, portions corresponding to the sidewalls of the tire, and the said cavity having, on each side of a plane including an equatorial line of the tire in the said radial cross-section, an outwardly extending profile the centre of the radius of curvature of which is inside the mould in a radially outer zone from the mould maximum width position to the said crown portion; characterized in that the said cavity has, on each side of the said plane including an equatorial line of the tire in the said radial cross-section, and in a radially inner zone from said mould maximum width position to the said bead portion, an outwardly extending profile whose radius of curvature is greater than that in the radially outer zone continuous with the said outwardly extending profile in the radially outer zone and the center of the radius of curvature of outwardly extending profile in the radially inner zone being inside the mould, and that the said foot portion has a width in the direction of the said rotational axis 20—50% wider than the width of the said rim.

**Patentansprüche**

1. Radialreifen mit einem Paar Seitenwände (5), Wulstabschnitten an den zugehörigen radial inneren Enden der Seitenwände, einem sich zwischen den radial äußeren Enden der Seitenwände erstreckenden Zenitabschnitt (6), einer Karkasse (3), welche wenigstens eine Cordschichten mit Corden aus organischer Faser umfassende Einlage aufweist und an ihren Enden um in die Wulstabschnitte eingebettete Wulstdrähte (1) umgeschlagen ist, um Umschläge zu bilden, wobei die Karkasse (3) bei auf eine Felge (7) montiertem, nicht aufgeblasenem oder mit einem Innendruck, der 5% des normalen Innendrucks beträgt, gefülltem Reifen beiderseits einer durch die Reifenmittellinie (0—0) gehenden Ebene in einem durch die Drehachse des Reifens gehenden radialen Querschnitt in einem radial äußeren Bereich zwischen der Stelle (Q) der größten Karkassenbreite und dem Zenitabschnitt eine nach außen hervortretende Konfiguration mit einem innerhalb der Karkasse gelegenen Mittelpunkt eines Krümmungsradius, und ferner in einem radial inneren Bereich zwischen der Stelle (Q) der größten Karkassenbreite und dem Wulstabschnitt eine an die nach außen hervortretende Konfiguration sich stetig anschließende nach innen hervortretende Konfiguration mit einem außerhalb der Karkasse gelegenen Mittelpunkt eines Krümmungsradius hat, dabei, wenn der Reifen auf der Felge mit dem normalen Innendruck gefüllt ist, die nach innen hervortretende Konfiguration der Karkasse in dem genannten radial inneren Bereich in eine modifizierte nach innern hervortretenden Konfiguration mit einem vergrößerten Krümmungsradius mit einer nach außen gewölbten Verformung geändert ist, die größer als die im radial äußeren Bereich ist, und wobei die Höhe (E) der Stelle (Q) der größten Karkassenbreite ab der Wulstsohle zwischen 50% und 65% der ab der Wulstsohle gemessenen Höhe (H) des am weitesten außen gelegenen Abschnitts des Zenitabschnitts beträgt, und die Höhe (D) der Verbindungsstelle der nach außen und nach innen hervortretenden Konfigurationen ab der Wulstohle zwischen 20% und 35% der Höhe (H) des am weitesten außen gelegenen Abschnitts des Zenitabschnitts beträgt, wenn der Reifen auf der Felge mit dem normalen Innendruck gefüllt ist, dadurch gekennzeichnet daß

i) die nach außen hervortretende Konfiguration der Karkasse (3) im genannten radial äußeren Bereich um eine kleineren Betrag nach außen gewölbt ist als die Verformung im radial inneren Bereich, wenn der Reifen auf der Felge mit dem normalen Innendruck gefüllt ist,

ii) die größte Karkassenbreite bei normalem Innendruck größer ist als die, wenn der Reifen mit dem Innendruck von 5% des normalen Innendrucks gefüllt ist, und

iii) zwischen der Karkasseneinlage (3) und ihren Umschlägen Kernreiter (2) aus hartem Gummi angeordnet sind.

2. Reifen nach Anspruch 1, dadurch gekennzeichnet, daß die genannte Konfigurationsänderung (f) im Bereich von 5% bis 10% der Höhe (D) der Verbindungsstelle der nach außen und nach innen hervortretenden Konfigurationen liegt, wenn der Innendruck auf den normalen Innendruck erhöht ist.

3. Reifen nach Anspruch 1 oder 2, dadurch gekennzeichnet, daß jeder Kernreiter (2) aus hartem Gummi sich von einer am oberen Abschnitt des zugehörigen Wulstdrahtes (1) gelegenen Stelle bis wenigstens zur Verbindungsstelle (D) der nach außen und nach innen hervortreteden Konfigurationen verjüngt.

4. Reifen nach Anspruch 3, dadurch gekennzeichnet, daß sich jeder Umschlag der Karkasseneinlage über das radial äußere Ende des zugehörigen Kernreiters (2) aus hartem Gummi, jedoch nicht über die Stelle (Q) der größten Karkassenbreite hinaus. erstreckt.

5. Reifen nach einem der Ansprüche 1 bis 4, dadurch gekennzeichnet, daß jeder der Kenreiter (2) aus hartem Gummi eine Shore-A-Härte von 80° bis 97° hat.

6. Reifen nach einem der Ansprüche 1 bis 5, dadurch gekennzeichnet, daß jeder der Kernreiter (2) aus hartem Gummi einen Verlustfaktor von 0,15 bis 0,25 und einen Verlustmodul von $8,0 \times 10^7$ bis $2,5 \times 10^8$ dyn/cm² hat.

7. Form zum Herstellen eines Radialreifens gemäß einem der vorhergehenden Ansprüche durch Vulkanisieren und Formen in der Form, wobei die Form eine Formhöhlung aufweist, die in einem durch eine der Drehachse des Reifens entsprechende Linie gehenden radialen Querschnitt den Seitenwänden des Reifens entsprechende Abschnitte und beiderseits einer durch eine Reifenmittellinie im genannten radialen Querschnitt gehenden Ebene in einem radial äußeren Bereich zwischen der Stelle der größten Formenbreite und dem genannten Zenitabschnitt ein nach außen hervortretendes Profil hat, wobei der Mittelpunkt von dessen Krümmungsradius innerhalb der Form gelegen ist, dadurch gekennzeichnet, daß die Formhöhlung beiderseits der durch eine Reifenmittellinie im genannten radialen Querschnitt gehenden Ebene und in einem radial inneren Bereich zwischen der Stelle der größten Formenbreite und dem Wulstabschnitt ein sich an das nach außen hervortretende Profil im radial äußeren Bereich stetig anschließendes nach außen hervortretendes Profil hat, dessen Krümmungsradius größer ist als der im radial äußeren Bereich, und der Mittelpunkt des Krümmungsradius vom nach außen hervortretenden Profil im radial inneren Bereich innerhalb der Form gelegen ist, und daß der genannte Basisabschnitt in der Richtung der Drehachse eine Breite hat, die um 20% bis 50% breiter als die Breite der Felge ist.

## Revendications

1. Pneumatique à carcasse radiale comprenant un couple de parois latérales (5), des parties formant talons situées au niveau d'extrémités respectives, intérieures du point de vue radial, des parois latérales, une partie sommitale (6) s'étendant entre les extrémités, extérieures du point de vue radial, des parois latérales, une carcasse (3) comprenant au moins une nappe incluant des couches de cordés formés de fibres organiques et possédant des extrémités rabattues autour de tringles (1) enserrées dans lesdites parties formant talons de manière à former des parties retournées et dans lequel la carcasse (3) possède, de chaque côté d'un plan passant par la ligne équatoriale O—O du pneumatique dans une coupe transversale radiale passant par l'axe de rotation du pneumatique, une configuration déployée vers l'extérieur et dont le centre du rayon de courbure est situé à l'intérieur de la carcasse dans une zone extérieure, du point de vue radiale, s'étendant entre une position (Q) au niveau de laquelle la largeur de la carcasse est maximale, et ladite partie sommitale, et en outre une configuration, s'étendant vers l'intérieur et réunie de façon continue à ladite configuration déployée vers l'extérieur et dont le centre du rayon de courbure est situé à l'extérieur de la carcasse dans une zone intérieure, du point de vue radial, s'étendant entre la position (Q), au niveau de laquelle la longueur de la carcasse est maximale, et ladite partie formant talon, lorsque le pneumatique monté sur une jante (7) n'est pas gonflé ou est gonflé à une pression inférieure égale à 5% de la pression intérieure normale; et dans lequel ladite configuration, qui s'étend vers l'intérieure, de ladite carcasse dans ladite zone intérieure du point de vue radial se prolonge par une configuration modifiée, qui s'étend vers l'intérieur et possède un rayon de courbure accru avec une déformation renflée vers l'extérieur, supérieure à celle de la zone extérieure du point de vue radial lorsque le pneumatique monté sur la jante est gonflé à la pression intérieure normale; et dans lequel la hauteur (E) de ladite position (Q), au niveau de laquelle la largeur de la carcasse est maximale, par rapport à la base du talon se situe dans une plage comprise entre 50 et 65% de la hauteur (H) de la partie la plus extérieure de la partie sommitale à partir de la base du talon, et la hauteur (D) de la jonction entre lesdites configurations s'étendant vers l'extérieur ou vers l'intérieur par rapport à la base du talon se situe dans une plage comprise entre 20 et 35% de ladite hauteur (H) de la partie la plus extérieure de la partie sommitale lorsque le pneumatique situé sur la jante est gonflé à la pression intérieure normale; caractérisé en ce que:

i) ladite configuration, qui s'étend vers l'extérieur, de la carcasse (3) dans ladite zone extérieure du point de vue radial est renflée vers l'extérieur, sur une distance inférieure à la déformation dans la zone intérieure du point de vue radial, lorsque le pneumatique situé sur la jante est gonflé à la pression intérieure normale;

ii) la largeur maximale de la carcasse pendant la pression intérieure normale est plus importante que lorsque ledit pneumatique est gonflé à une pression intérieure égale à 5% de la pression intérieure normale; et

iii) des éléments de remplissage en caoutchouc dur (2) sont disposés entre ladite nappe (3) de la carcasse et les parties retournées de cette dernière.

2. Pneumatique selon la revendication 1, caractérisé en ce que ladite modification (f) de la configuration se situe dans une plage comprise entre 5 et 10% de la hauteur (D) du point de jonction desdites configurations s'étendant vers l'extérieur ou vers l'intérieur lorsque la pression intérieure est élevée à la valeur de la pression extérieure normale.

3. Pneumatique selon la revendication 1 ou 2, caractérisé en ce que chaque élément de remplissage en caoutchouc dur (2) se rétrécit depuis une position située au voisinage de la partie supérieure de ladite tringle respective (1) au moins jusqu'au point de jonction (D) entre lesdites configurations s'étendant vers l'extérieur et vers l'intérieur.

4. Pneumatique selon la revendication 3, caractérisé en ce que chacune desdites parties retournées de la nappe de la carcasse s'étend au-delà de l'extrémité extérieure, du point de vue radial, de l'élément de remplissage en caoutchouc dur respectif (2), mais ne s'étend pas au-delà de ladite position (Q), au niveau de laquelle la largeur de la carcasse est maximale.

5. Pneumatique selon l'une quelconque des revendications 1 à 4, caractérisé en ce que chaque desdits éléments en caoutchouc dur (2) possède une dureté Shore A égale à 80—97°.

6. Pneumatique selon l'une quelconque des revendications 1 à 5, caractérisé en ce que chacun desdits éléments de remplissage en caoutchouc dur (2) possède une tangente de pertes égale à 0,15—0,25 et un module de pertes compris entre $8,0 \times 10^7$ et $2,5 \times 10^8$ dynes/cm$^2$.

7. Moule pour fabriquer un pneumatique à carcasse radiale selon l'une quelconque des revendications précédentes, par vulcanisation et mise en forme dans le moule, ledit moule comprenant une cavité possédant, conformément à une coupe transversale radiale passant par une droite correspondant à l'axe de rotation du pneumatique, des parties correspondant aux parois latérales du pneumatique, et ladite cavité comportant, de chacune côté d'un plan passant par une ligne équatoriale du pneumatique dans ladite second transversale radiale, un profil s'étendant vers l'extérieur et dont le centre du rayon de courbure se situe à l'intérieur du moule dans une zone extérieure, du point de vue radial, s'étendant entre la position, au niveau de laquelle la largeur du moule est maximale, et ladite partie sommitale; caractérisé en ce que ladite cavité possède, de chaque côté dudit plan contenant une ligne équatoriale du pneumatique dans ladite section transversale radiale, et dans une zone intérieure, du point de vue radial, s'étendant entre ladite position, au niveau de laquelle la largeur du moule est maximale, et ladite partie formant talon, un profil s'étendant vers l'extérieur et dont le rayon de courbure est supérieur à celui présent dans la zone extérieure du point de vue radial, qui est réunie de façon continue audit profil, qui s'étend vers l'extérieur, dans la zone extérieure du point de vue radial, et dont le centre du rayon de courbure dans la zone intérieure du point de vue radial se situe à l'intérieur du moule, et que ladite partie formant talon possède, dans la direction dudit axe de rotation, une largeur supérieure de 20 à 50% à celle de ladite jante.

EP 0 103 984 B1

# FIG. 1

# FIG.2a

# FIG. 2b

# FIG. 3

Inflation with Normal Inner Pressure

Bulged Deformation

# FIG. 4

Inflation with Normal Inner Pressure

Bulged Deformation

## FIG_5

## FIG_6